# EUROPÄISCHE PATENTSCHRIFT

(11) **EP 2 699 973 B1**
(45) Veröffentlichungstag und Bekanntmachung des Hinweises auf die Patenterteilung: **04.07.2018**
(21) Anmeldenummer: 12712960.9
(22) Anmeldetag: 29.03.2012
(51) Int. Cl.: G05D 1/02

(54) **SYSTEM, INSBESONDERE ANLAGE, MIT AUF EINEM BODEN VERFAHRBAREN FAHRZEUG**
SYSTEM, IN PARTICULAR INSTALLATION, HAVING A VEHICLE DRIVABLE ON A FLOOR
SYSTÈME, EN PARTICULIER INSTALLATION, COMPORTANT UN VÉHICULE SE DÉPLAÇANT AU SOL

(30) Priorität: 21.04.2011 DE 102011018615
(43) Veröffentlichungstag der Anmeldung: 26.02.2014
(73) Patentinhaber: Sew-Eurodrive GmbH & Co. KG, 76646 Bruchsal (DE)
(72) Erfinder: HUA, Zhidong, 76131 Karlsruhe (DE); SCHMIDT, Josef, 76676 Graben-Neudorf (DE); MEYROWITZ, Gunnar, 26123 Oldenburg (DE); WANJEK, Andreas, 68753 Waghaüsel (DE)
(86) Internationale Anmeldenummer: PCT/EP2012/001382
(87) Internationale Veröffentlichungsnummer: WO 2012/143085

(56) Entgegenhaltungen:
- EP-A2- 1 862 953
- EP-A2- 2 284 636
- EP-A2- 2 284 636
- DE-A1-102006 004 400
- JP-A- 2008 288 889
- US-A1- 2007 255 452
- US-A1- 2007 255 452
- US-B1- 6 493 614
- US-B1- 6 493 614

## Beschreibung

Die Erfindung betrifft ein System, insbesondere Anlage, mit auf einem Boden verfahrbaren Fahrzeug.

Es ist bekannt, mit einem RFID Lesegerät Daten, die in einem Transponder gespeichert sind, auszulesen.

Aus der EP 2 284 636 A2 ist ein Spurführungssystem für automatisch geführte Fahrzeuge (AGV) bekannt.

Aus der US 6 493 614 B1 ist ein Steuerverfahren für ein automatisches Führungssystem bekannt.

Aus der US 2007/255452 A1 ist ein Steuerungssystem für einen bewegbaren Roboter bekannt.

Aus der DE 10 2006 004 400 A1 ist Navigationsverfahren mit einem Lesegerät zur Detektion der Position und mit einer Ausrichtungs-Messeinrichtung bekannt.

Aus der JP 2008-288 889 A ist ein Signalübertragungssystem für eine Kommunikationsvorrichtung bekannt.

Aus der DE 10 2006 024 948 A1 ist ein Verfahren zur kontaktlosen Übertragung von Daten und/oder Energie zwischen einem Endgerät und wenigstens einem Transponder bekannt.

Der Erfindung liegt daher die Aufgabe zugrunde, ein System, insbesondere Anlage, mit auf einem Boden verfahrbaren Fahrzeug weiterzubilden, wobei die Navigation verbesserbar sein soll.

Erfindungsgemäß wird die Aufgabe bei dem System, insbesondere Anlage, mit auf einem Boden verfahrbaren Fahrzeug nach den in Anspruch 1 angegebenen Merkmalen gelöst.

Wichtige Merkmale der Erfindung bei dem System, insbesondere Anlage, mit auf einem Boden verfahrbaren Fahrzeug, sind, dass das Fahrzeug ein RFID Lesegerät aufweist, welches mit einer Antenne SL verbunden ist,
wobei bei Eintreten der Antenne SL in den Kopplungsbereich einer bodenverlegten, mit einem stationär angeordneten RFID Transponder, insbesondere RFID Tag, verbundenen Antenne im Transponder abgespeicherte Daten vom Lesegerät auslesbar sind,
wobei ein oder mehrere Dauermagnete am Boden angeordnet sind, insbesondere im Boden fest verbunden sind,
das Fahrzeug einen Sensor zur Erfassung der Richtung des Magnetfelds aufweist.

Von Vorteil ist dabei, dass mittels der Transponder eine Position und mittels des Magnetfeldes die Fahrtrichtung des Fahrzeugs bestimmbar ist. Somit ist die Ausrichtung des Fahrzeugs und Position bestimmbar, also die vollständig raumorientierte Positionsinformation.

Da ein einfacher und kostengünstiger Dauermagnet verwendbar ist, ist die Orientierung des Fahrzeugs und somit die Fahrtrichtung ebenfalls in einfacher Weise bestimmbar.

Bei einer vorteilhaften Ausgestaltung sind am Boden mehrere RFID Transponder, insbesondere RFID Tag, mit einer jeweils verbundenen Antenne stationär angeordnet, insbesondere bodenverlegt, so dass die mit dem Lesegerät verbundene Antenne SL des Fahrzeugs in den Kopplungsbereich bringbar ist. Von Vorteil ist dabei, dass die Information über die Position mittels Transpondern übertragbar ist und somit in einfacher Weise detektierbar. Außerdem sind weitere Daten im Transponder übertragbar an das Fahrzeug.

Bei einer vorteilhaften Ausgestaltung sind die Dauermagnete derart angeordnet, dass das von dem oder von den Dauermagneten erzeugte Magnetfeld in mehreren Kopplungsbereichen dieselbe Richtung aufweist, insbesondere wobei die Kopplungsbereiche linienhaft aneinandergereiht sind. Von Vorteil ist dabei, dass ein einziger Dauermagnet für mehrere Kopplungsbereiche verwendbar ist und somit in einfacher Weise eine Richtungsdetektion ausführbar ist.

Bei einer vorteilhaften Ausgestaltung weist ein weiterer Transponder eine Antenne S0 auf, deren Kopplungsbereich die Kopplungsbereiche mehrerer Transponder umfasst oder zumindest teilweise umfasst. Von Vorteil ist dabei, dass große Datenmengen abspeicherbar sind, wobei der zugehörige Transponder für mehrere Kopplungsbereiche verwendbar ist. Es sind also dieselben Daten bevorratbar für die zusammengehörigen Kopplungsbereiche.

Bei einer vorteilhaften Ausgestaltung sind entweder alle Dauermagnete derart angeordnet, dass in den Kopplungsbereichen das von den Dauermagneten erzeugte Magnetfeld stets dieselbe Richtung aufweist
und/oder
im jeweiligen Transponder nicht nur Information bezüglich der Position sondern auch Information bezüglich der im zum Kopplungsbereich der Antenne des Transponders zugehörigen Magnetfeldrichtung gespeichert und vom Lesegerät auslesbar ist. Von Vorteil ist dabei, dass weitere Informationen auslesbar sind. Beispielsweise sind dies Informationen, wie Fahrbefehle oder Aufträge für das Fahrzeuge. Außerdem sind Informationen hinterlegbar in dem Transponder für ein nachfolgendes Fahrzeug, wenn das Lesegerät auch als Schreibgerät betreibbar ist.

Bei einer vorteilhaften Ausgestaltung sind im weiteren Transponder Informationen gespeichert, speicherbar und auslesbar, die nicht die Position des Transponders betreffen, insbesondere wobei die Informationen Befehle für nachfolgende Fahrzeuge umfassen. Von Vorteil ist dabei, dass von einem vorausfahrenden Fahrzeug Befehle für ein nachfolgendes Fahrzeug hinterlegbar sind.

Bei einer vorteilhaften Ausgestaltung umfasst der Sensor einen Hallsensor und/oder einen Wiegandsensor, insbesondere so dass die Richtung des den empfindlichen Bereich des Sensors durchquerenden Magnetfeldes erfassbar ist. Von Vorteil ist dabei, dass die Fahrtrichtung, also Orientierung des Fahrzeugs, detektierbar ist.

Bei einer vorteilhaften Ausgestaltung ist die Antenne SL als ebene Wicklung ausgeführt, wobei die Ebene parallel ausgerichtet und/oder beabstandet ist zu einer die Antennen der bodenverlegten Transponder umfassenden Ebene. Von Vorteil ist dabei, dass die bodenverlegten Teile überfahrbar sind vom Fahrzeug und der Sensor in einer Höhe über dem Boden vorsehbar ist.

Bei einer vorteilhaften Ausgestaltung ist das RFID Lesegerät ein RFID Schreib/Lese-Gerät, also zum Senden und wahlweise Empfangen von Daten geeignet ausgeführt ist. Von Vorteil ist dabei, dass nicht nur Daten aus einem Transponder auslesbar sind sondern auch übertragbar sind und somit hinterlegbar sind in einem Speicher des Transponders, insbesondere im Speicher desjenigen Transponders, dessen seiner Antenne S0 zugeordneter Kopplungsbereich mehrere Kopplungsbereiche umfasst oder zumindest teilweise umfasst.

Bei einer vorteilhaften Ausgestaltung sind die Kopplungsbereiche Bereiche induktiver Kopplung, insbesondere als die Antenne SL mit den Antennen der Transponder induktiv koppelbar sind, indem das Fahrzeug eine geeignete Position erreicht. Von Vorteil ist dabei, dass keine Fernfeldübertragung stattfindet sonder die Positionsinformation des Transponders nur in dem engen Raumbereich um die Antenne des Transponders herum, also in dessen Kopplungsbereich, eine induktive Kopplung erreichbar ist und somit die Positionsinformation nur in diesem Raumbereich übertragbar ist. Daher sind Fehler bei der Positionsbestimmung verhinderbar.

Bei einer vorteilhaften Ausgestaltung ist das von den Dauermagneten erzeugte Magnetfeld in den Kopplungsbereichen mindestens zehnmal, insbesondere mindestens hundertmal, stärker als das restliche Hintergrundfeld, insbesondere Erdmagnetfeld. Von Vorteil ist dabei, dass mittels der Dauermagnete das Hintergrundfeld unterdrückbar ist und ein hohes Signal-Rausch-Verhältnis erreichbar ist.

Bei einer vorteilhaften Ausgestaltung ist im Boden ein Primärleiter verlegt, an den eine Sekundärwicklung des Fahrzeugs induktiv angekoppelt ist zur induktiven Versorgung des Fahrzeugs,
wobei die Antennen der Transponder jeweils eine erste und eine weitere Teilwicklung aufweisen,
die eine derartige umwickelte Fläche, einen derartigen Wicklungssinn und eine derartige Wicklungszahl aufweisen, dass die vom Primärleiter in den Teilwicklungen induzierten Spannungen betragsgleich sind und sich gegenseitig aufheben,
insbesondere wobei der Primärleiter derart weit beabstandet ist von den Kopplungsbereichen der bodenverlegten Antennen, dass das vom Primärleiter erzeugte Magnetfeld im Wesentlichen homogen ist. Von Vorteil ist dabei, dass eine induktive Leistungsversorgung für das Fahrzeug verwendbar ist, obwohl die von dem Starkstrom des Primärleiters verursachten Magnetfelder auftreten. Da aber jedoch die Antennen der Transponder und des Lesegeräts jeweils aus Teilwicklungen zusammengesetzt sind, in welche betragsgleiche, aber entgegengesetzte Spannungen induziert werden, ist eine Unterdrückung der Wirkung des Primärleiterstromes erreichbar und die Datenübertragung ist ungestört ausführbar. Allerdings muss hierzu die Antenne des Lesegeräts derart im Kopplungsberiech der Antenne des jeweiligen Transponders positioniert werden, dass die erste Teilwicklung der Antenne des Transponders und die erste Teilwicklung der Antenne des Lesegeräts gekoppelt sind. Außerdem müssen ebenso die weiteren Antenne des Transponders und des Lesegeräts miteinander gekoppelt sein.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein erstes erfindungsgemäßes Ausführungsbeispiel gezeigt, wobei Dauermagnete im Bereich von RFID-Transpondern stationär auf einer von einem Fahrzeug überfahrbaren Fläche angeordnet sind.
In der Figur 2 ist ein zweites erfindungsgemäßes Ausführungsbeispiel gezeigt, wobei die Dauermagnete gegenüber der Figur 1 um 90° verdreht angeordnet sind.

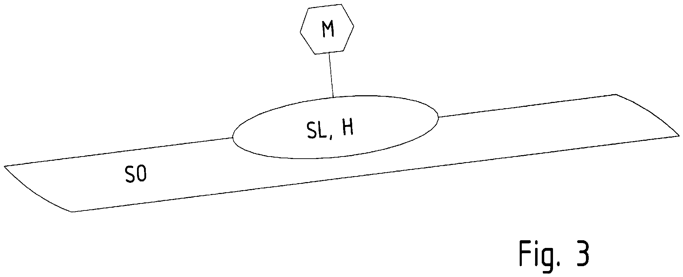

In der Figur 3 ist die Position des Fahrzeugs gezeigt bei Erreichen der Antenne S0 des Transponders.

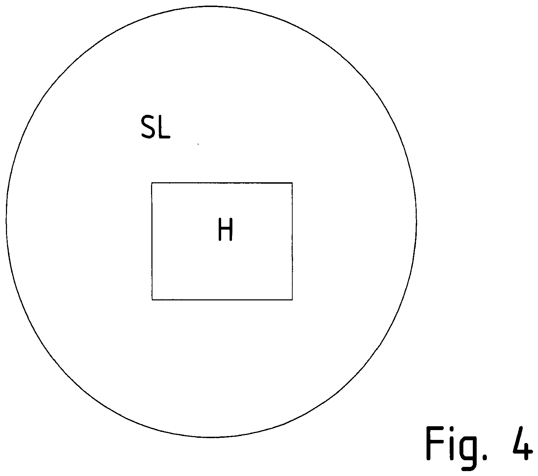

In der Figur 4 ist ein Sensor H des Fahrzeugs M im Bereich der Antenne SL des Fahrzeugs M gezeigt.

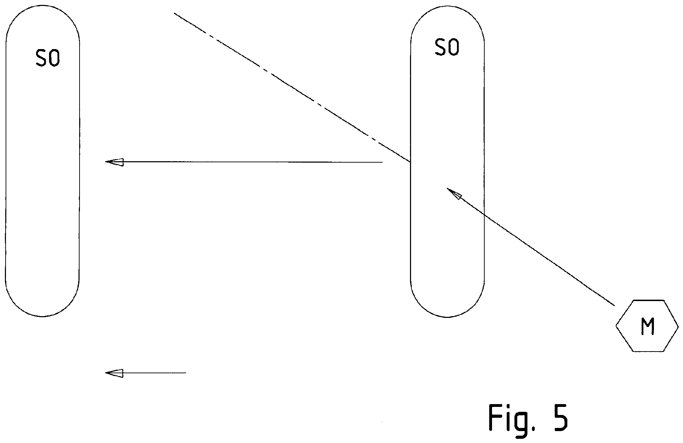

In der Figur 5 ist die Fahrtrichtung des Fahrzeugs gezeigt, welches auf eine erste und später dann auf eine parallel verschoben angeordnete weitere Antenne S0 eines Transponders T0 trifft, wobei bei Eintreffen des Fahrzeugs M im Bereich der ersten Antenne S0 die Position und Richtung des Fahrzeugs bestimmt wird und davon abhängig ein Richtungswechsel ausgeführt wird, so dass das Fahrzeug den Bereich der weiteren Antenne erreicht und dort eine gewünschte Position im Bereich eines weiteren Transponders.

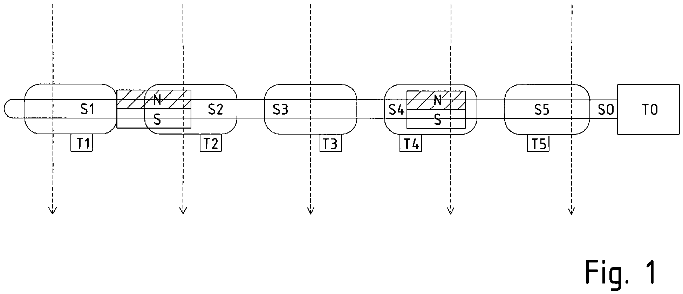

Wie in der Figur 1 gezeigt, sind am Boden einer Anlage Dauermagnete angeordnet, wobei die Dauermagnete zueinander parallel ausgerichtet sind.

Außerdem ist ein RFID-Transponder T0 mit einer langgestreckt verlegten Antenne S0 vorgesehen, in deren Bereich weitere RFID-Transponder T1, T2, T3, T4, T5 mit ihren jeweiligen Antennen S1, S2, S3, S4, S5 angeordnet sind.

Die zueinander parallel ausgerichteten Dauermagnete erzeugen in einer über dem Boden angeordneten Ebene ein im Wesentlichen gleichgerichtetes Magnetfeld, so dass eine ausgezeichnete Richtung des Magnetfeldes in der Ebene im Bereich der Antennen S1, S2, S3, S4, S5 der Transponder erzeugt ist. Vorzugsweise ist die Ebene vom Boden etwas beabstandet und parallel zum Boden vorgesehen.

Das auf dem Boden verfahrbare Fahrzeug M weist ein RFID Lesegerät auf, welches eine Antenne SL aufweist, in deren Bereich, insbesondere in deren umwickelter Fläche ein Magnetsensor H, insbesondere Hallsensor oder GMR-Sensor, angeordnet ist.

Somit ist beim Eintreffen der Antenne SL des Fahrzeugs in einem Raumbereich, in welchem eine Datenübertragung zwischen den bodenverlegten Transpondern T1, T2, T3, T4 oder T5 mit dem Lesegerät ermöglicht ist, nicht nur mittels Auslesen dieser Transponder eine Positionsbestimmung sondern mittels Detektion des Magnetfeldes, insbesondere Bestimmung der Richtung des von den Dauermagneten erzeugten Magnetfeldes, eine Bestimmung der Ausrichtung des Fahrzeugs M ermöglicht.

Außerdem ist vom Lesegerät auch eine größere Datenmenge vom Transponder T0, welcher für die Speicherung von großen Datenmengen vorgesehen ist, auslesbar.

Auf diese Weise ist also bei Eintreffen der Antenne SL im Kopplungsbereich zur Antenne S3 des Transponders T3 die Information über die erreichte Position aus dem Transponderdaten auslesbar, mittels des Sensors H die Ausrichtung des Fahrzeugs bestimmbar und mittels Datenüberragung weitere Daten des Transponders T0 auslesbar. Diese weiteren Daten sind auch auslesbar, wenn die Antenne SL des Fahrzeugs die Positionen der anderen Transponder T1, T2, T4 oder T5 erreicht.

Das Fahrzeug weist eine Lenkung auf, so dass ein Richtungswechsel abhängig von der bestimmten Fahrtrichtung und der neu bestimmten Zielposition steuerbar ist.

Bei Erreichen eines weiteren Bereichs gemäß Figur 1, welcher am Boden parallel verschoben angeordnet ist, ist wiederum ein Bestimmen der neuen Position über den dortigen Transponder (T1, T2, T3, T4 oder T5) und ein Auslesen von Daten aus dem dortigen neuen Transponder T0 ermöglicht. Außerdem ist wiederum ein Bestimmen der Fahrtrichtung und ein davon abhängiges Ansteuern einer neuen Fahrtrichtung ermöglicht. Somit ist also ein Navigieren auf der Bodenfläche ermöglicht, ohne dass das Fahrzeug ein Navigationssystem oder dergleichen aufwiesen muss.

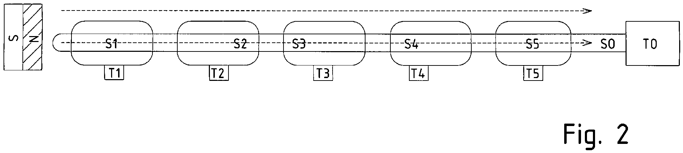

Im Unterschied zur Figur 1 ist in Figur 2 die Magnetfeldrichtung im Bereich der Antenne S0 90° verdreht.

Unter Kopplungsbereich wird derjenige Raumbereich in Reichweite des jeweiligen Sendemittels verstanden, in welchem eine Datenübertragung zwischen der Antenne S0 des Lesegeräts und einer Antenne (S1, S2, S3, S4, S5) eines der Transponder ausführbar ist. Dieser Raumberiech ist somit abhängig von der Empfindlichkeit des Empfängers und der Sendeleistung. Vorzugsweise ist der Kopplungsbereich der Bereich induktiver Kopplung, so dass die Datenübertragung über die induktive Kopplung der Antennen erfolgt - nicht aber über eine Fernfeldübertragung. Die Reichweite ist also nur unwesentlich größer als die Antenne des Senders. Somit ist eine genaue Positionsbestimmung ermöglicht, wobei die Genauigkeit einer Auflösung in der Größenordnung des Raumbereichs entspricht.

Bei weiteren erfindungsgemäßen Ausführungsbeispielen wird statt des Lesegeräts ein Schreib-Lesegerät verwendet, so dass auch Daten vom Fahrzeug an einen Transponder, beispielsweise T0, übertragbar und dort speicherbar sind. Somit sind Daten, wie beispielsweise auch Fahraufträge für ein nachfolgendes Fahrzeug, auch abspeicherbar im Transponder T0 und an ein nachfolgendes Fahrzeug übergebbar.

### Bezugszeichenliste

T0 Transponder für die Datenspeicherung
T1, T1, T2, T3, T4, T5 Transponder für die Positionsmarkierung
S0 Antenne des Transponders T0
S1, S2, S3, S4, S5 Antenne des jeweiligen Transponders T1, T1, T2, T3, T4, T5 N Nordpol des Dauermagneten
S Südpol des Dauermagneten
M mobile Einheit, also Fahrzeug
SL Antenne des RFID Lesegeräts des Fahrzeugs M
H Magnetsensor, insbesondere Hallsensor oder GMR-Sensor
---> Magnetfeldlinien
→ Fahrtrichtung

## Patentansprüche

1. System, insbesondere Anlage, mit auf einem Boden verfahrbaren Fahrzeug,
wobei das Fahrzeug ein RFID Lesegerät aufweist, welches mit einer Antenne (SL) verbunden ist,
wobei bei Eintreten der Antenne (SL) in den Kopplungsbereich einer bodenverlegten, mit einem stationär angeordneten RFID Transponder (T0), insbesondere RFID Tag, verbundenen Antenne (S0) im Transponder (T0) abgespeicherte Daten vom Lesegerät auslesbar sind,
**wobei** ein oder mehrere Dauermagnete am Boden angeordnet sind, insbesondere im Boden fest verbunden sind,
das Fahrzeug einen Sensor zur Erfassung der Richtung des Magnetfelds aufweist,
**wobei ein weiterer Transponder (T0) eine Antenne (S0) aufweist, deren Kopplungsbereich die Kopplungsbereiche mehrerer Transponder (T1, T2, T3, T4, T5) umfasst oder zumindest teilweise umfasst,**
**wobei im jeweiligen Transponder (T1, T2, T3, T4, T5) nicht nur Information bezüglich der Position sondern auch Information bezüglich der zum Kopplungsbereich der Antenne (S1, S2, S3, S4, S5) des Transponders zugehörigen Magnetfeldrichtung gespeichert und vom Lesegerät auslesbar ist**
**wobei im weiteren Transponder (T0) Informationen gespeichert, speicherbar und auslesbar sind, die nicht die Position des Transponders (T0) betreffen,**
**wobei die Informationen Befehle für nachfolgende Fahrzeuge umfassen.**

2. System nach Anspruch 1,
**dadurch gekennzeichnet, dass**
am Boden mehrere RFID Transponder (T1, T2, T3, T4, T5), insbesondere RFID Tag, mit einer jeweils verbundenen Antenne (S1, S2, S3, S4, S5) stationär angeordnet sind, insbesondere bodenverlegt sind, so dass die mit dem Lesegerät verbundene Antenne (SL) des Fahrzeugs in den Kopplungsbereich bringbar ist.

3. System nach mindestens einem der vorangegangenen Ansprüche,
**dadurch gekennzeichnet, dass**
die Dauermagnete derart angeordnet sind, dass das von dem oder von den Dauermagneten erzeugte Magnetfeld in mehreren Kopplungsbereichen dieselbe Richtung aufweist, insbesondere wobei die Kopplungsbereiche linienhaft aneinandergereiht sind.

4. System nach mindestens einem der vorangegangenen Ansprüche,
**dadurch gekennzeichnet, dass**
alle Dauermagnete derart angeordnet sind, dass in den Kopplungsbereichen das von den Dauermagneten erzeugte Magnetfeld stets dieselbe Richtung aufweist.

5. System nach mindestens einem der vorangegangenen Ansprüche,
**dadurch gekennzeichnet, dass**
der Sensor einen Hallsensor und/oder einen Wiegandsensor umfasst, insbesondere so dass die Richtung des den empfindlichen Bereich des Sensors durchquerenden Magnetfeldes erfassbar ist.

6. System nach mindestens einem der vorangegangenen Ansprüche,
**dadurch gekennzeichnet, dass**
die Antenne (SL) als ebene Wicklung ausgeführt ist, wobei die Ebene parallel ausgerichtet und/oder beabstandet ist zu einer die Antennen der bodenverlegten Transponder (T1, T2, T3, T4, T5) umfassenden Ebene.

7. System nach mindestens einem der vorangegangenen Ansprüche,
**dadurch gekennzeichnet, dass**
das RFID Lesegerät ein RFID Schreib/Lese-Gerät ist, also zum Senden und wahlweise Empfangen von Daten geeignet ausgeführt ist.

8. System nach mindestens einem der vorangegangenen Ansprüche,
**dadurch gekennzeichnet, dass**
die Kopplungsbereiche Bereiche induktiver Kopplung sind, insbesondere als die Antenne (SL) mit den Antennen der Transponder (T1, T2, T3, T4, T5) induktiv koppelbar sind, indem das Fahrzeug eine geeignete Position erreicht.

9. System nach mindestens einem der vorangegangenen Ansprüche,
**dadurch gekennzeichnet, dass**
das von den Dauermagneten erzeugte Magnetfeld in den Kopplungsbereichen mindestens zehnmal, insbesondere mindestens hundertmal, stärker ist als das restliche Hintergrundfeld, insbesondere Erdmagnetfeld.

10. System nach mindestens einem der vorangegangenen Ansprüche,
**dadurch gekennzeichnet, dass**
**im Boden ein Primärleiter verlegt ist, an den eine Sekundärwicklung des Fahrzeugs induktiv angekoppelt ist zur induktiven Versorgung des Fahrzeugs,**
**wobei die Antennen der Transponder (T1, T2, T3, T4, T5) jeweils eine erste und eine weitere Teilwicklung aufweisen,**
**die eine derartige umwickelte Fläche, einen derartigen Wicklungssinn und eine derartige Wicklungszahl aufweisen, dass die vom Primärleiter in den Teilwicklungen induzierten Spannungen betragsgleich sind und sich gegenseitig aufheben,**
**insbesondere wobei der Primärleiter derart weit beabstandet ist von den Kopplungsbereichen der bodenverlegten Antennen, dass das vom Primärleiter erzeugte Magnetfeld im Wesentlichen homogen ist.**

## Claims

1. System, in particular installation, having a vehicle movable on a floor,
wherein the vehicle has an RFID reading device which is connected to an antenna (SL),
wherein when the antenna (SL) enters the coupling region of a floor-installed antenna (S0), which is connected to a stationarily arranged RFID transponder (T0), in particular RFID tag, data stored in the transponder (T0) is able to be read out by the reading device,
wherein one or a plurality of permanent magnets are arranged on the floor, in particular are fixedly connected in the floor,
the vehicle has a sensor for detecting the direction of the magnetic field,
wherein a further transponder (T0) has an antenna (S0), the coupling region of which comprises or at least partially comprises the coupling regions of a plurality of transponders (T1, T2, T3, T4, T5),
wherein in the respective transponder (T1, T2, T3, T4, T5) not only information regarding the position but also information regarding the magnetic field direction associated with the coupling region of the antenna (S1, S2, S3, S4, S5) of the transponder is stored and is able to be read out by the reading device,
wherein information which does not relate to the position of the transponder (T0) is stored, able to be stored and able to be read out in the further transponder (T0),
wherein the information comprises instructions for following vehicles.

2. System according to claim 1,
**characterised in that**
a plurality of RFID transponders (T1, T2, T3, T4, T5), in particular RFID tags, with a connected antenna (S1, S2, S3, S4, S5) in each case, are stationarily arranged on the floor, in particular installed in the floor, so that the antenna (SL), connected to the reading device, of the vehicle is able to be brought into the coupling region.

3. System according to at least one of the preceding claims,
**characterised in that**
the permanent magnets are arranged such that the magnetic field generated by the permanent magnet or permanent magnets has the same direction in a plurality of coupling regions, in particular wherein the coupling regions are lined up next to each other.

4. System according to at least one of the preceding claims,
**characterised in that**
all the permanent magnets are arranged such that the magnetic field generated by the permanent magnets always has the same direction in the coupling regions.

5. System according to one of the preceding claims,
**characterised in that**
the sensor comprises a Hall sensor and/or a Wiegand sensor, in particular so that the direction of the magnetic field crossing the sensitive region of the sensor is detectable.

6. System according to at least one of the preceding claims,
**characterised in that**
the antenna (SL) is implemented as planar winding, wherein the plane is aligned in parallel with and/or at a distance from a plane comprising the antennas of the floor-installed transponders (T1, T2, T3, T4, T5).

7. System according to at least one of the preceding claims,
**characterised in that**
the RFID reading device is an RFID write/read device, that is to say, designed to be suitable for transmitting and optionally receiving data.

8. System according to at least one of the preceding claims,
**characterised in that**
the coupling regions are regions of inductive coupling, in particular since the antenna (SL) is able to be inductively coupled to the antennas of the transponders (T1, T2, T3, T4, T5) by the vehicle reaching a suitable position.

9. System according to at least one of the preceding claims,
**characterised in that**
the magnetic field generated by the permanent magnets in the coupling regions is at least ten times, in particular at least one hundred times, stronger than the remaining background field, in particular earth's magnetic field.

10. System according to at least one of the preceding claims,
**characterised in that**
a primary conductor is installed in the floor, to which a secondary winding of the vehicle is inductively coupled for the inductive supply of the vehicle,
wherein the antennas of the transponders (T1,T2, T3, T4, T5) in each case have a first and a further partial winding,
which have a wound surface, a winding direction, and a number of windings such that the voltages induced in the partial windings by the primary conductor are of equal amount and cancel each other out,
in particular wherein the primary conductor is set far apart from the coupling regions of the floor-installed antennas such that the magnetic field generated by the primary conductor is substantially homogeneous.

## Revendications

1. Système, en particulier installation, comportant un véhicule se déplaçant au sol,
sachant que le véhicule présente un appareil de lecture RFID (identification par radiofréquence) qui est relié à une antenne (SL),
sachant que l'entrée de l'antenne (SL) dans la zone de couplage d'une antenne (S0) posée au sol et reliée à un transpondeur RFID (T0) disposé stationnairement, en particulier à une balise RFID, permet à l'appareil de lecture de lire les données enregistrées dans le transpondeur (T0),
sachant qu'un ou plusieurs aimants permanents sont disposés sur le sol, en particulier sont fixés dans le sol,
que le véhicule présente un capteur pour détecter la direction du champ magnétique,
sachant qu'un autre transpondeur (T0) présente une antenne (S0) dont la zone de couplage englobe ou englobe au moins partiellement les zones de couplage de plusieurs transpondeurs (T1, T2, T3, T4, T5),
sachant que non seulement l'information concernant la position mais aussi l'information concernant la direction du champ magnétique associée à la zone de couplage de l'antenne (S1, S2, S3, S4, S5) du transpondeur sont enregistrées dans le transpondeur respectif (T1, T2, T3, T4, T5) et peuvent être lues par l'appareil de lecture,
sachant que des informations qui ne concernent pas la position du transpondeur (T0) sont enregistrées ou peuvent être enregistrées dans l'autre transpondeur (T0), et peuvent être lues,
sachant que les informations comprennent des ordres pour des véhicules suivants.

2. Système selon la revendication 1, **caractérisé en ce que** plusieurs transpondeurs RFID (T1, T2, T3, T4, T5), en particulier des balises RFID, avec une antenne respectivement reliée (S1, S2, S3, S4, S5), sont disposés stationnairement sur le sol, en particulier sont posés au sol, de sorte que l'antenne (SL) du véhicule, reliée à l'appareil de lecture, peut être amenée dans la zone de couplage.

3. Système selon au moins une des revendications précédentes, **caractérisé en ce que** les aimants permanents sont disposés de telle sorte que le champ magnétique produit par le ou les aimants permanents présente la même direction dans plusieurs zones de couplage, sachant en particulier que les zones de couplage sont linéairement juxtaposées.

4. Système selon au moins une des revendications précédentes, **caractérisé en ce que** tous les aimants permanents sont disposés de telle sorte que, dans les zones de couplage, le champ magnétique produit par les aimants permanents présente toujours la même direction.

5. Système selon au moins une des revendications précédentes, **caractérisé en ce que** le capteur comprend un capteur à effet Hall et/ou un capteur de Wiegand, en particulier de telle sorte que la direction du champ magnétique traversant la zone sensible du capteur peut être détectée.

6. Système selon au moins une des revendications précédentes, **caractérisé en ce que** l'antenne (SL) est réalisée sous forme d'enroulement plan, sachant que le plan est orienté parallèlement à un plan englobant les antennes des transpondeurs (T1, T2, T3, T4, T5) posés au sol, et/ou est distant de ce plan.

7. Système selon au moins une des revendications précédentes, **caractérisé en ce que** l'appareil de lecture RFID est un appareil de lecture/écriture RFID, donc est réalisé d'une manière appropriée pour émettre et au choix recevoir des données.

8. Système selon au moins une des revendications précédentes, **caractérisé en ce que** les zones de couplage sont des zones de couplage inductif, étant donné en particulier que l'antenne (SL) peut être couplée par induction aux antennes des transpondeurs (T1, T2, T3, T4, T5) par le fait que le véhicule atteint une position appropriée.

9. Système selon au moins une des revendications précédentes, **caractérisé en ce que** le champ magnétique produit par les aimants permanents dans les zones de couplage est au moins dix fois, en particulier au moins cent fois, plus puissant que le champ magnétique de fond résiduel, en particulier le champ magnétique terrestre.

10. Système selon au moins une des revendications précédentes, **caractérisé en ce qu'**un conducteur primaire est posé dans le sol, conducteur auquel est couplé par induction un enroulement secondaire du véhicule afin d'alimenter par induction le véhicule,
sachant que les antennes des transpondeurs (T1, T2, T3, T4, T5) présentent respectivement un premier enroulement partiel et un autre enroulement partiel,
qui présentent une surface enroulée telle, un sens d'enroulement tel et un nombre de spires tel que les tensions induites par le conducteur primaire dans les enroulements partiels sont d'un montant identique et s'annulent mutuellement,
sachant en particulier que le conducteur primaire est suffisamment éloigné des zones de couplage des antennes posées au sol pour que le champ magnétique produit par le conducteur primaire soit essentiellement homogène.
